# EUROPEAN PATENT APPLICATION

(11) **EP 1 063 261 A2**
(43) Date of publication of application: **27.12.2000**
(21) Application number: 00113084.8
(22) Date of filing: 26.06.2000
(51) Int. Cl.: C08L 23/16, C08K 3/26, C08K 3/22

(54) **Sulfur-vulcanized rubber composition for making laminate and laminate**

(30) Priority: 24.06.1999 JP 17826699
(71) Applicant: Sumitomo Chemical Company, Limited, Chuo-ku Osaka 541-8550 (JP); Toyoda Gosei Co., Ltd., Nishikasugai-gun, Aichi 452-8564 (JP)
(72) Inventor: Wadaki, Takeru, Sodegaura-shi, Chiba 299-0241 (JP); Okita, Tomoaki, Kasugai-shi, Aichi 486-0833 (JP); Nakashima, Katsumi, Ichinomiya-shi, Aichi 491-0135 (JP)
(74) Representative: VOSSIUS & PARTNER

(57) **Abstract**

The present invention provides a sulfur-vulcanized rubber composition for making a laminate, which is used in contact with a thermoplastic resin composition and contains (A) a rubber component; (B) at least one member selected from a group consisting of hydrotalcite and magnesium oxide; and (C) a mineral oil containing no aromatic component.

## Description

The present invention relates to a sulfur-vulcanized rubber composition for making a laminate, and the laminate. More specifically, the present invention relates to a sulfur-vulcanized rubber composition for making a laminate, which is used in contact with a thermoplastic resin composition and has an excellent characteristic that it does not generate discoloration such as yellowing, thereby constantly maintaining its beautiful appearance of initial use; and the laminate using this sulfur-vulcanized rubber composition.

Laminates comprising a first layer made of a thermoplastic composition and a second layer, in contact with the first layer, made of a sulfur-vulcanized rubber composition have been used in various fields. However, conventional techniques have been problematic in that thermoplastic resin composition layers yield discoloration such as yellowing with time, thereby deteriorating their appearances.

In view of such circumstances, it is an object of the present invention to provide a sulfur-vulcanized rubber composition for making a laminate, which is used in contact with a thermoplastic resin composition and has an excellent characteristic that it does not generate discoloration such as yellowing, thereby constantly maintaining its beautiful appearance of initial use; and the laminate using this sulfur-vulcanized rubber composition.

That is, the present invention relates to a sulfur-vulcanized rubber composition for making a laminate, the sulfur-vulcanized rubber composition being used in contact with a thermoplastic resin composition and containing the following ingredients (A) to (C):
(A): a rubber component;
(B): at least one member selected from a group consisting of hydrotalcite and magnesium oxide; and
(C): a mineral oil containing no aromatic component.

The present invention also relates to a laminate having a first layer made of the above-mentioned rubber composition and a second layer made of a thermoplastic resin composition in contact with or pressed against the first layer.

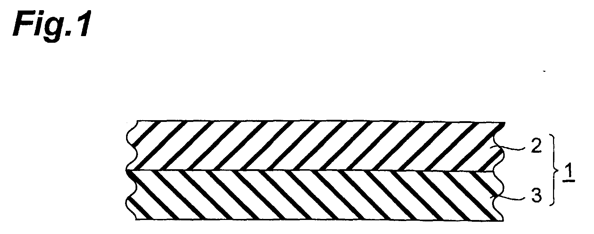

Figure 1 is a sectional view showing a preferred embodiment of the laminate of the present invention.

The ingredient (A) according to the present invention is a rubber component. A specific example of the rubber component is ethylene/α-olefin/unconjugated diene terpolymer rubber. Examples of α-olefin include propylene, 1-butene, 1-pentene, 1-hexene, 4-methyl-1-pentene, 1-octene, and 1-decene, among which propylene is preferred. Examples of unconjugated diene include 1,4-hexadiene, dicyclopentadiene, and 5-ethylidene-2-norbornene. The ratio (weight ratio) of ethylene/α-olefin in the rubber component is usually 90/10 to 30/70. When ethylene/α -olefin/unconjugated diene terpolymer rubber is used, the content of unconjugated diene is usually 5 to 40 in terms of iodine value. Oil extended rubber may also be used. A specific preferred example of ethylene/α -olefin/unconjugated diene copolymer rubber is ethylene/propylene/unconjugated diene terpolymer rubber having an ethylene/propylene weight ratio of 85/15 to 45/55.

Preferred as ethylene/α-olefin terpolymer rubber is one having a Mooney viscosity at 100°C (ML₁₊₄ 100°C) of 10 to 350, more preferably 30 to 300. Its mechanical strength may deteriorate if the Mooney viscosity is too low, whereas the appearance of the molded product may deteriorate if the Mooney viscosity is too high.

The ingredient (B) according to the present invention is hydrotalcite, magnesium oxide, or magnesium oxide and hydrotalcite. Hydrotalcite is a kind of known natural minerals, whose compositional formula is represented by Mg₆Al₂(OH)₁₆CO₃ · 4H₂O, and is supposed to have a layered two-dimensional structure (e.g., Polyfile, No. 9, 1995, pp. 45-50). Also, magnesium oxide is a known material, whose compositional formula is represented by MgO. The content of hydrotalcite or magnesium oxide in the rubber composition of the present invention is preferably 0.1 to 20 parts by weight per 100 parts by weight of the rubber ingredient. Its effect against discoloration may be insufficient if the content is too low, whereas the appearance of the molded product or its physical properties such as tensile strength may deteriorate if the content is too high. When hydrotalcite and magnesium oxide are used together, the amount of ingredient (B) is based on the total amount of hydrotalcite and magnesium oxide (0.1 to 20 parts by weight in total).

The ingredient (C) according to the present invention is a mineral oil containing no aromatic component (measurement limit or less). The aromatic component is the component represented by %C_{A} in ASTM D 3238-80 (n-d-M ring analysis method). A specific example of the ingredient (C) is a paraffin oil containing no aromatic component. Preferred as the paraffin oil is one having a %C_{P} of at least 50% and a %C_{A} of substantially 0% (measurement limit or less) in ASTM D 3238-80 (n-d-M ring analysis method). If an aromatic component exists in the mineral oil, then discoloration such as yellowing may occur with time in the layer of thermoplastic resin composition in contact with the sulfur-vulcanized rubber composition, thereby deteriorating its appearance. The compounding amount of the mineral oil is usually 10 to 150 parts by weight per 100 parts by weight of the rubber component.

For yielding the rubber composition of the present invention, the ingredients (A) to (C) are kneaded by use of an open roll, a Banbury mixer, or the like, with reinforcing agents such as carbon black and silica which are usually compounded into vulcanized rubber compositions, inorganic fillers such as talc and calcium carbonate, flame retardants, lubricants, antioxidants, and the like being added thereto if necessary.

The rubber composition of the present invention may also contain thermoplastic resins such as low-density polyethylene resin, straight-chain low-density polyethylene resin, superlow-density polyethylene resin, high-density polyethylene resin, and propylene resin.

The rubber composition of the present invention is a sulfur-vulcanized rubber composition for making a laminate, which is used in contact with a thermoplastic resin. Figure 1 is a sectional view showing a preferred embodiment of the laminate of the present invention. The embodiment of the laminate 1 of the present invention has a first layer 2 made of the rubber composition of the present invention and a second layer 3 made of a thermoplastic resin composition in contact with or pressed against the first layer 2. A more specific embodiment is a laminate 1 obtained by thermally fusing the layer 2 made of the rubber composition of the present invention and the layer 3 of a thermoplastic resin compound together. Specific examples of the laminate 1 include interior and exterior parts for cars, such as packing and sealing materials, waterproof sheets, and the like.

The present invention will now be explained with reference to Examples.

### Example 1

The compounding agents shown in Table 1 were kneaded by use of a BR type Banbury mixer, and then, with 1 part by weight of sulfur, 2 parts by weight of vulcanization accelerator CBS (N-cyclohexylbenzothiazole sulfenamide), 1 part by weight of vulcanization accelerator TMTD (tetramethylthiuram disulfide), and 5 parts by weight of calcium oxide being added thereto, kneading was carried out by use of a 10-inch roll. Thus obtained compound was subjected to press vulcanization at 160°C for 20 minutes, and then to post cure in a Geer oven at 220°C for 5 minutes, so as to yield a vulcanized rubber composition. Concerning this vulcanized rubber composition, the discoloration characteristic of a thermoplastic resin composition was evaluated by a method which will be explained later. The results of evaluation were favorable in that substantially no discoloration was seen even after the lapse of 100 to 400 hours.

### Comparative Example 1

The procedure of Example 1 was carried out except that hydrotalcite was not used. The results are shown in Table 1. Discoloration to yellow was seen after the lapse of 100 to 400 hours.

### Comparative Example 2

The procedure of Example 1 was carried out except that the process oil containing no aromatic component in Example 1 was replaced by a process oil containing an aromatic component (by 6.4% in terms of %C_{A} in ASTM D 3238-80 (n-d-M ring analysis method)) and that hydrotalcite was not used. The results are shown in Table 1. Discoloration to yellow was seen after the lapse of 100 to 400 hours.

### Comparative Example 3

The procedure of Example 1 was carried out except that the process oil containing no aromatic component in Example 1 was replaced by the process oil containing an aromatic component (by 6.4% in terms of %C_{A} in ASTM D 3238-80 (n-d-M ring analysis method)). The results are shown in Table 1. Discoloration to yellow was seen after the lapse of 100 to 400 hours.

### (Method of Evaluating Discoloration Characteristic)

A sheet-like extruded sample having a thickness of 0.7 mm was obtained from a polyolefin thermoplastic elastomer resin composition (manufactured by Sumitomo Chemical Co., Ltd.; Sumitomo TPE 5280A) by use of an extruder with a diameter of 20 mm. This thermoplastic elastomer resin sheet and each vulcanized rubber sheet were set to a mold having a thickness of 2.6 mm, which was heated by a pressurized press at 175°C for 5 minutes and then cooled at room temperature for 5 minutes, whereby a laminate of the vulcanized rubber and resin was obtained. This laminate was evaluated by a UV fade meter (with a black panel temperature of 83°C). After the lapse of 100 to 400 hours, the degree of discoloration was evaluated in conformity to JIS K 7105, whereby color difference (ΔE) and yellowing factor (ΔYI) were determined.

**TABLE 1**

| | Example 1 | Comp.Ex.1 | Comp.Ex.2 | Comp.Ex.3 |
|---|---|---|---|---|
| **Compound (p.b.w.)** | | | | |
| Ethylene/propylene/diene copolymer rubber | 100 | 100 | 100 | 100 |
| Low-density polyethylene | 20 | 20 | 20 | 20 |
| Carbon black | 120 | 120 | 120 | 120 |
| Hydrotalcite | 10 | - | - | 10 |
| Calcium carbonate | 20 | 20 | 20 | 20 |
| Phenol-formaldehyde resin | 3 | 3 | 3 | 3 |
| Process oil containing no aromatic component | 73 | 73 | - | - |
| Process oil containing aromatic component | - | - | 73 | 73 |
| Zinc oxide | 5 | 5 | 5 | 5 |
| Stearic acid | 1 | 1 | 1 | 1 |

| **Evaluation results** | | | | |
|---|---|---|---|---|
| 100H ΔE | 3.8 | 5.2 | 11.5 | 14.6 |
| 200H ΔE | 5.9 | 12.6 | 19.2 | 21.7 |
| 400H ΔE | 7.9 | 26.1 | 21.5 | 33.7 |
| 100H ΔYI | 8.7 | 11.0 | 28.5 | 36.8 |
| 200H ΔYI | 13.9 | 31.6 | 52.0 | 56.6 |
| 400H ΔYI | 19.8 | 55.8 | 56.4 | 60.4 |

As explained in the foregoing, the present invention can provide a sulfur-vulcanized rubber composition for making a laminate, which is used in contact with a thermoplastic resin composition and has an excellent characteristic that it does not generate discoloration such as yellowing, thereby constantly maintaining its beautiful appearance of initial use; and the laminate using this sulfur-vulcanized rubber composition.

From the invention thus described, it will be obvious that the invention may be varied in many ways. Such variations are not to be regarded as a departure from the spirit and scope of the invention, and all such modifications as would be obvious to one skilled in the art are intended for inclusion within the scope of the following claims.

## Claims

1. A sulfur-vulcanized rubber composition for making a laminate, said sulfur-vulcanized rubber composition being used in contact with a thermoplastic resin composition and containing the following ingredients (A) to (C):
(A): a rubber component;
(B): at least one member selected from a group consisting of hydrotalcite and magnesium oxide; and
(C): a mineral oil containing no aromatic component.

2. A rubber composition according to claim 1, wherein said ingredient (A) is ethylene/α-olefin/unconjugated diene copolymer rubber.

3. A rubber composition according to claim 1 or 2, wherein said ingredient (B) has a content of 0.1 to 20 parts by weight per 100 parts by weight of said ingredient (A).

4. A laminate having a first layer made of a rubber composition according to any of claims 1 to 3 and a second layer made of a thermoplastic resin composition in contact with or pressed against said first layer.

5. A laminate according to claim 4, obtained by thermally fusing said first layer and said second layer together.
